# EUROPEAN PATENT APPLICATION

(11) **EP 1 770 582 A1**
(43) Date of publication of application: **04.04.2007**
(21) Application number: 06356118.7
(22) Date of filing: 27.09.2006
(51) Int. Cl.: G06F 21/00

(54) **Method, system and apparatus for limiting short message forwarding**

(30) Priority: 29.09.2005 CN 200510108115
(71) Applicant: Huawei Technologies Co., Ltd., Longgang District, Shenzhen Guangdong 518129 (CN)
(72) Inventor: Wei, Dong, Shenzhen Guangdong Province 518129 (CN)
(74) Representative: Colombo, Michel

(57) **Abstract**

A system for limiting short message forwarding of the present invention, includes a sending apparatus for limiting short message forwarding arranged in a sender and a receiving apparatus for limiting short message forwarding arranged in a receiver; when sending a short message, the sender adds the information for limiting short message forwarding to the short message to limit the receiver to forward the short message; after receiving the short message with the information for limiting short message forwarding from the sender, the receiver may only forward the short message according to the forwarding limitation by the sender upon the short message. By this way, the forwarding times of a short message may be limited when a user sends the short message. The present invention enables the short message sender to have a greater control right and opportunity on the short message.

## Description

### Field of the Invention

The present invention relates to mobile communication field, and more particularly, to a method, a system and an apparatus for limiting short message forwarding.

### Background of the Invention

In the modern society, mobile communication terminals such as mobile phone have become people's indispensable communication tools. In the daily life, Short Message Service (SMS) has been accepted generally and utilized widely by vast mobile phone users because of its convenience, quickness and cheapness, etc.

SMS is a store-and-forward and non-real-time message service, the sending and receiving process of which can be divided into five steps as follows:

A. a sender sending a message (SMS-SUBMIT)

A message sender sending an SMS-SUBMIT message to a Short Message Service Center (SMSC).

B. the SMSC acknowledging the sender (SMS-SUBMIT-REPORT)

The SMSC sending an SMS-SUBMIT-REPORT message for acknowledging the message sender.

C. the SMSC sending a message (SMS-DELIVER)

The SMSC sending an SMS-DELIVER message to the message receiver.

D. the receiver acknowledging the SMSC (SMS-DELIVER-REPORT)

The message receiver sending an SMS-DELIVER-REPORT message for acknowledging the SMSC.

E. the SMSC reporting the sender that the message has been sent (SMS-STATUS-REPORT)

Sending short message has become an indispensable method of contacting in the lives of many persons, and some short messages with popular content are sometimes continuously forwarded among numerous mobile phone users; in which many short messages are bought from the authors of those short messages by network spreaders, but the network spreaders may only receive rewards directly from their local downloaders. Therefore, network spreaders expect the short message forwarding times may be limited in a certain degree. Sometimes short message authors don' t want their edited short messages are forwarded without limit either.

However, in the prior methods for short message processing, there is no technical solution pertinently limiting the forwarding of the short messages. In the systems and their apparatus for short message services in the prior art, there is no technical solution limiting short message forwarding either.

### Summary of the Invention

The present invention provides a method, a system and an apparatus for limiting short message forwarding, by which the forwarding of a short message may be limited.

According to one aspect of the present invention, a method for limiting the short message forwarding includes:

sending by a sender a short message with information for limiting short message forwarding;

forwarding by a receiver the short message according to the received information for limiting short message forwarding.

The step of sending by a sender a short message with information for limiting short message forwarding includes:

adding the information for limiting short message forwarding to the short message;

sending the short message.

The step of adding the information for limiting the short message forwarding to the short message includes:

writing identification information presenting the information for limiting short message forwarding to an existing information element or an extended information element of the short message; or,

setting an identifier presenting the information for limiting short message forwarding in the text field of the short message.

The types of the information for limiting short message forwarding include: without limiting the forwarding of the short message, limiting the forwarding times of the short message, or forbidding the forwarding of the short message.

The step of forwarding by a receiver the short message according to the received information for limiting short message forwarding includes:

obtaining, by the receiver, the information for limiting short message forwarding;

determining how to forward the short message according to the information for limiting short message forwarding.

The step of determining how to forward the short message according to the information for limiting short message forwarding includes:

when the type of the information for limiting short message forwarding is without limiting the forwarding of the short message, the receiver being capable of forwarding the short message unrestrictedly;

or,

when the type of the information for limiting short message forwarding is limiting the forwarding times of the short message, the receiver being capable of forwarding the short message in specified times;

or,

when the type of the information for limiting short message forwarding is forbidding the forwarding of the short message, the receiver being incapable of forwarding the short message.

Wherein when the information for limiting short message forwarding requires limiting the forwarding times of the short message, sending the information for limiting short message forwarding that disallows to forward the forwarded short message while forwarding the short message by the receiver.

wherein the obtaining by the receiver the information for limiting short message forwarding includes:

obtaining the information for limiting short message forwarding according to the identification information of the existing information element or the extended information element of the short message;

or,

obtaining the information for limiting short message forwarding according to the identifier in the text field of the short message.

In another aspect of the present invention, there is provided a sending apparatus for limiting short message forwarding, which is arranged in a short message sender and includes:

a setting unit for limiting short message forwarding, used to add the information for limiting short message forwarding to a short message;

a short message sending functional unit, used to send a short message which has been configured with the information for limiting short message forwarding.

The setting unit for limiting short message forwarding is arranged in a setting unit of the sender; and/or the short message sending functional unit is arranged in a short message functional unit of the sender.

In a further aspect of the present invention, there is provided a receiving apparatus for limiting short message forwarding, which is arranged in a short message receiver and includes:

a short message receiving functional unit, used to receive a short message which has been configured with the information for limiting short message forwarding;

a short message forwarding unit, used to forward the short message according to the information for limiting short message forwarding.

The short message receiving functional unit or the short message forwarding unit is arranged in a short message functional unit of the receiver.

In yet another aspect of the present invention, there is provided a system for limiting short message forwarding, the system including:

a sending apparatus for limiting short message forwarding, arranged in a short message sender, used to send the information for limiting short message forwarding, which limits a receiver to forward a short message, while sending the short message;

a receiving apparatus for limiting short message forwarding, arranged in a short message receiver, used to forward the short message according to the forwarding limitation by the sender upon the short message, after receiving the short message with the information for limiting short message forwarding from the sender.

In the present invention, when sending a short message, the sender adds the information for limiting short message forwarding to the short message to limit the receiver to forward the short message; after receiving the short message with the information for limiting short message forwarding from the sender, the receiver may only forward the short message according to the forwarding limitation by the sender upon the short message. By this way, the forwarding times of a short message may be limited when a user sends the short message. The present invention enables the short message sender to have a greater control right and opportunity on the short message, and enables the short message service to serve vast terminal users in a better way.

### Brief Description of the Drawings

Fig.1 is a processing flow chart for a sender in the method of the present invention for limiting short message forwarding;

Fig.2 is a processing flow chart for a receiver in the method of the present invention for limiting short message forwarding;

Fig.3 is a diagram illustrating the structure of the system for limiting short message forwarding according to an embodiment of the present invention;

Fig.4 is a diagram illustrating the structure of the system for limiting short message forwarding according to another embodiment of the present invention.

### Detailed Description of the Embodiments

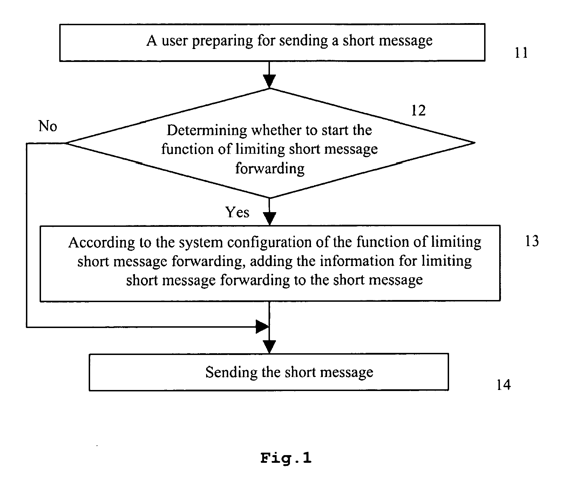

In the method of the present invention for limiting short message forwarding, a specific embodiment of the processing flow for a sender is shown in Fig.1, including:

Step 11, a user preparing for sending a short message.

Here the preparative short message may be edited by the user himself or may be a short message pending for being forwarded without forwarding limitation.

Step 12, determining whether to start the function of limiting short message forwarding; if it is Yes, proceeding with Step 13; otherwise, proceeding with Step 14.

Step 13, according to the system configuration of the function of limiting short message forwarding, adding the information for limiting short message forwarding to the short message.

The information for limiting short message forwarding in this step may be expressed in various types, for example, in the three types as follows:

1. without limiting the forwarding of the short message;

2. limiting the forwarding times of the short message;

3. forbidding the forwarding of the short message.

A user can set the type of the information for limiting short message forwarding added to a short message, according to the detailed content of the short message.

Step 14, sending the short message.

In the above process the configuration for limiting short message forwarding is accomplished in the sender.

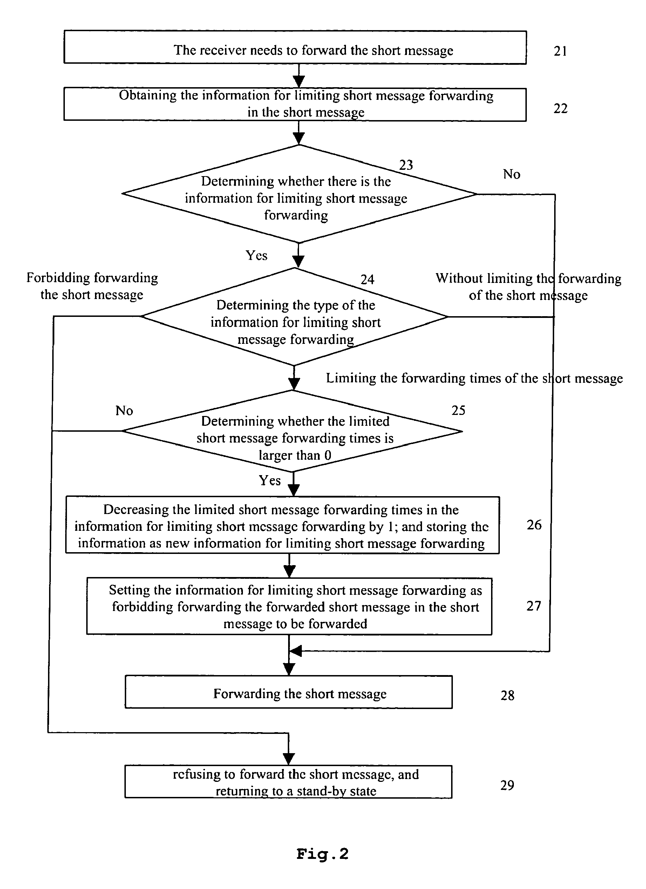

As shown in Fig.2, after the receiver has received the above short message, the specific flow includes:

Step 21, the receiver needing to forward the short message.

Step 22, obtaining the information for limiting short message forwarding in the short message.

Step 23, determining whether there is the information for limiting short message forwarding; if it is Yes, executing Step 24; otherwise, executing Step 28.

Step 24, determining the type of the information for limiting short message forwarding:

if the type is limiting the forwarding times of the short message, executing Step 25;

if type is without limiting the forwarding of the short message, executing Step 28;

if type is forbidding the forwarding of the short message, executing Step 29.

Step 25, determining whether the limited short message forwarding times in the information for limiting short message forwarding is larger than 0; if it is Yes, executing Step 26; otherwise, executing Step 29.

Step 26, decreasing the limited short message forwarding times in the information for limiting short message forwarding by 1, and storing the information as new information for limiting short message forwarding.

Step 27, setting the information for limiting short message forwarding in the short message to be forwarded as forbidding the forwarding of the forwarded short message.

Step 28, forwarding the short message.

Step 29, refusing to forward the short message, and returning to a stand-by state.

During the above procedure of processing the short message, in order to implement or cancel the function of limiting short message forwarding, it can be set in the sender and/or the receiver whether to start the function of limiting short message forwarding.

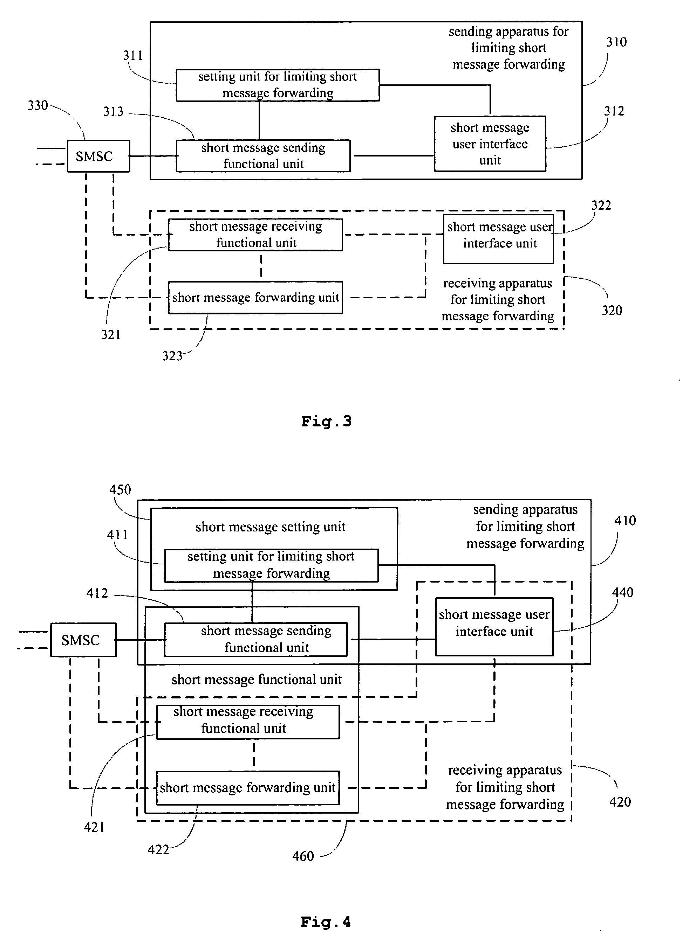

The system for limiting short message forwarding according to an embodiment of the present invention, which implements the method described above, is shown in Fig.3, the system including: a sending apparatus 310 for limiting short message forwarding, and a receiving apparatus 320 for limiting short message forwarding.

The sending apparatus 310 for limiting short message forwarding is arranged in the short message sender, including: a setting unit 311 for limiting short message forwarding, a short message user interface unit 312 and a short message sending functional unit 313, wherein

the setting unit 311 for limiting short message forwarding is used to add the information for limiting short message forwarding in a short message, and set the type of the information for limiting short message forwarding; the types of the information for limiting short message forwarding include: limiting the forwarding times of the short message, without limiting the forwarding of the short message, and forbidding the forwarding of the short message;

the short message user interface unit 312 is connected to the setting unit 311 for limiting short message forwarding, so as to implement the setting and the viewing of the information for limiting short message forwarding in the setting unit 311 for limiting short message forwarding by a user, and to provide a human-computer interaction interface when a user sends a short message;

the short message sending functional unit 313 is connected to the setting unit 311 for limiting short message forwarding and the short message user interface unit 312, used to send the short message configured with the information for limiting short message forwarding to an SMSC 330.

The receiving apparatus 320 for limiting short message forwarding is arranged in a short message receiver, including a short message receiving functional unit 321, a short message user interface unit 322 and a short message forwarding unit 323; wherein

the short message receiving functional unit 321 receives the short message forwarded from the SMSC 330, which is configured with the information for limiting short message forwarding;

the short message user interface unit 322 is connected to the short message receiving functional unit 321, used to provide a human-computer interaction interface through which a user operates the short message received by the short message receiving functional unit 321; and

the short message forwarding unit 323 is connected to the short message receiving functional unit 321 and the short message user interface unit 322, used to forward the short message to the SMSC 330 according to the user's acknowledgement.

Referring to Fig. 4, which is a diagram illustrating the system for limiting short message forwarding according to another embodiment of the present invention. The sending apparatus for limiting short message forwarding and the receiving apparatus for limiting short message forwarding are arranged on a same mobile communication terminal and are used to send the short messages of the terminal and forward the short messages received by the terminal respectively.

The short message user interface unit 440 is used in common by the sending apparatus 410 for limiting short message forwarding and the receiving apparatus 420 for limiting short message forwarding, and may be the original short message user interface module.

The setting unit 411 for limiting short message forwarding is a sub-module added to the short message setting unit 450 of the sender;

the short message sending functional unit 412 is a sub-module added to the short message functional unit 460 of the sender;

the short message receiving functional unit 421 is a sub-module added to the short message functional unit 460 of the receiver;

the short message forwarding unit 422 is a sub-module added to the short message functional unit 460 of the receiver.

The present invention will be further explained with reference to specific embodiments.

In an embodiment of the present invention, the definition of information element identifications in Header of TP-UD field is extended.

As shown in Table 1, it is a definition of information element identifications in Header field of TP-UD field of SMS-SUBMIT message.

**Table 1**

| Hex Value | description |
|---|---|
| 00 | Concatenated short messages, 8-bit reference number |
| 01 | Special SMS Message Indication |
| 02 | Reserved |
| 03 | Value not used to avoid misinterpretation as <LF> character |
| 04 | Application port addressing scheme, 8 bit address |
| 05 | Application port addressing scheme, 16 bit address |
| 06 | SMSC Control Parameters |
| 07 | UDH Source Indicator |
| 08 | Concatenated short message, 16-bit reference number |
| 09 | Wireless Control Message Protocol |
| 0A | Text Formatting |
| 0B | Predefined Sound |
| 0C | User Defined Sound (iMelody max 128 bytes) |
| 0D | Predefined Animation |
| 0E | Large Animation (16*16 times 4 = 32*4 =128 bytes) |
| 0F | Small Animation (8*8 times 4 = 8*4 =32 bytes) |
| 10 | Large Picture (32*32 = 128 bytes) |
| 11 | Small Picture (16*16 = 32 bytes) |
| 12 | Variable Picture |
| 13-1F | Reserved for future EMS features (see clause 3.10) |
| 20 | RFC 822 E-Mail Header |
| 21-6F | Reserved for future use |
| 70 - 7F | (U)SIM Toolkit Security Headers |
| 80 - 9F | SME to SME specific use |
| A0 - BF | Reserved for future use |
| C0 - DF | SC specific use |
| E0 - FF | Reserved for future use |

To implement the function of limiting the short message forwarding function, it is required for the sender of a short message to add an information element for limiting short message forwarding in Header domain of TP-UD field of an SMS-SUBMIT message.

The information element includes three parts as follows:

1) information element identification

From the above definition it can be seen that in which 02, 21-6F, AO-BF, EO-FF are all reserved values, that is, they are not applied in the prior implementation of short message. Therefore, any value may be chosen from these reserved values as the identifier of the information element for limiting short message forwarding.

The sender of a short message adds the information for limiting short message forwarding to an SMS-SUBMIT message through the identifier.

2) the size of the information element

the size is arranged as 2, which refers to two octets, that is, the next data section includes two octets.

3) the data of the information element

the first octet:

0: FORWARD_ALLOWED, allowing the receiver of a short message to forward the short message unrestrictedly;

1: FORWARD_LIMITED, limiting the receiver of a short message to forward the short message;

the second octet:

unsigned number within the range of 0~255, used to mark the limited forwarding times of a short message. When the number is 0, the forwarding of the short message by the receiver thereof is forbidden. That is, when the sender of a short message starts the function of limiting short message forwarding, the short messages created and sent by the sender of the short message can be forwarded 225 times at most by the receiver of the short message in the network.

To guarantee that the receiver of a short message can obtain the information element for limiting the forwarding of the short message configured by the sender of the short message, it is required that the SMS-DELIVER message forwarded to the receiver of the short message by the SMSC includes the same information element for limiting short message forwarding as that in the SMS-SUBMIT message.

In the embodiment, user interfaces for limiting short message forwarding also needs to be defined.

1) interface for setting the information for limiting short message forwarding

The interface is used to add the corresponding information element for limiting short message forwarding in an SMS-SUBMIT message when the sender of a short message sends the SMS-SUBMIT message. The information element identifies whether the sender of the short message allows the receiver of the short message to forward the short message and the allowable maximum short message forwarding times in the network.

2) interface for obtaining the information for limiting short message forwarding

The interface is used to abstract the corresponding information element for limiting short message forwarding from the SMS-DELIVER message when the receiver of the short message receives the SMS-DELIVER message. The information element identifies whether the sender of the short message allows the receiver of the short message to forward the short message and the allowable maximum short message forwarding times in the network. When there is no corresponding information element for limiting short message forwarding in the SMS-DELIVER message, the short message is defaulted as without forwarding limitation configured.

Based on the above message extension and interface definitions, the limited forwarding of the short message can be accomplished according to the above flow, which will not be explained here repeatedly.

In the above embodiments, the function of limiting short message forwarding is implemented mainly through the extension of the prior SMS processing scheme and the cooperation of relevant up-layer SMS applications. Moreover, the function of limiting short message forwarding may be implemented in other ways, for example:

1. When the sender of a short message sends the SMS-SUBMIT message, a special identifier can be inserted into a given location of the text data field of the short message in TP-UD field, which identifies whether to allow a receiver of the short message to forward the short message and the allowable maximum short message forwarding times.

2. After the receiver of the short message has received the SMS-DILIVER message, the special ID is read out from the given location of the text data field of the short message in TP-UD field, which identifies whether to allow the short message receiver to forward the short message and the allowable maximum short message forwarding times.

3. The specific sending and receiving processing procedure is similar with that of the above implementation; the difference between them is that, here the information for limiting short message forwarding is transmitted between the sender and the receiver of a short message by means of the text data field of the short message in the TP-UD fields of the SMS-SUBMIT message and the SMS-DELIVER message, but not via the information element for limiting short message forwarding in the Headers of TP-UD fields of the SMS-SUBMIT message and the SMS-DELIVER message.

The implementation of this embodiment is relatively simple, but requires the short message sender and the short message receiver to come to an agreement on the special identifier.

What mentioned above are preferred embodiments of the present invention. It is understood that the scope of the invention should not be limited to those embodiments. Any variation or substitution which is conceivable in the disclosed technical range by the present invention for those skilled in the art is intended to fall into the scope of the present invention. Therefore, the scope of the present invention should be defined by the following claims.

## Claims

1. A method for limiting short message forwarding, said method comprising:
sending, by a sender, a short message with information for limiting short message forwarding;
forwarding, by a receiver, said short message according to the received information for limiting short message forwarding.

2. The method according to claim 1, wherein said step of sending by a sender a short message with information for limiting short message forwarding comprises:
adding the information for limiting short message forwarding to said short message; and
sending said short message.

3. The method according to claim 2, wherein said step of adding the information for limiting short message forwarding to said short message comprises:
writing identification information presenting the information for limiting short message forwarding to an existing information element or an extended information element of said short message; or,
setting an identifier presenting the information for limiting short message forwarding in the text field of said short message.

4. The method according to claim 3, wherein the types of the information for limiting short message forwarding comprise: without limiting the forwarding of said short message, limiting the forwarding times of said short message, or forbidding the forwarding of said short message.

5. The method according to claim 1, wherein said step of forwarding by a receiver said short message according to the received information for limiting short message forwarding comprises:
obtaining, by said receiver, the information for limiting short message forwarding;
determining how to forward said short message according to the information for limiting short message forwarding.

6. The method according to claim 5, wherein said step of determining how to forward said short message according to the information for limiting short message forwarding comprises:
when the type of the information for limiting short message forwarding is without limiting the forwarding of said short message, said receiver being capable of forwarding said short message unrestrictedly;
or,
when the type of the information for limiting short message forwarding is limiting the forwarding times of said short message, said receiver being capable of forwarding said short message in specified times;
or,
when the type of the information for limiting short message forwarding is forbidding the forwarding of said short message, the receiver being incapable of forwarding said short message.

7. The method according to claim 6, wherein when the information for limiting short message forwarding requires limiting the forwarding times of said short message, said receiver sends the information for limiting short message forwarding that disallows to forward the forwarded short message while forwarding said short message.

8. The method according to claim 5, wherein said step of obtaining by said receiver the information for limiting short message forwarding comprises:
obtaining the information for limiting short message forwarding according to the identification information of the existing information element or the extended information element of the short message;
or,
obtaining the information for limiting short message forwarding according to the identifier in the text field of the short message.

9. A sending apparatus for limiting short message forwarding, arranged in a short message sender, said apparatus comprising:
a setting unit for limiting short message forwarding, used to add the information for limiting short message forwarding to a short message;
a short message sending functional unit, used to send a short message which has been configured with the information for limiting short message forwarding.

10. The sending apparatus according to claim 9, wherein said setting unit for limiting short message forwarding is arranged in a short message setting unit of the sender; and/or said short message sending functional unit is arranged in a short message functional unit of the sender.

11. A receiving apparatus for limiting short message forwarding, arranged in a short message receiver, said apparatus comprising:
a short message receiving functional unit, used to receive a short message which has been configured with the information for limiting short message forwarding;
a short message forwarding unit, used to forward said short message according to the information for limiting short message forwarding.

12. The receiving apparatus for limiting short message forwarding according to claim 11, wherein said short message receiving functional unit or said short message forwarding unit is arranged in a short message functional unit of the receiver.

13. A system for limiting short message forwarding, said system comprising:
a sending apparatus for limiting short message forwarding, arranged in a short message sender, used to send the information for limiting short message forwarding, which limits a receiver to forward a short message, while sending the short message;
a receiving apparatus for limiting short message forwarding, arranged in a short message receiver, used to forward said short message according to the forwarding limitation by said sender upon said short message, after receiving the short message with the information for limiting short message forwarding from the sender.
